# EUROPEAN PATENT SPECIFICATION

(11) **EP 3 821 159 B1**
(45) Date of publication and mention of the grant of the patent: **04.01.2023**
(21) Application number: 19816870.0
(22) Date of filing: 27.09.2019
(51) Int. Cl.: F16K 15/02

(54) **SAFETY VALVE AND RADIATOR USING SUCH SAFETY VALVE**
SICHERHEITSVENTIL UND HEIZKÖRPER MIT EINEM SOLCHEN SICHERHEITSVENTIL
SOUPAPE DE SÉCURITÉ, ET RADIATEUR UTILISANT UNE TELLE SOUPAPE DE SÉCURITÉ

(30) Priority: 27.09.2018 IT 201800008984
(43) Date of publication of application: 19.05.2021
(73) Proprietor: Athena S.p.A., 36045 Alonte (VI) (IT)
(72) Inventor: GUARDA, Manuele, 36075 Montecchio Maggiore (VI) (IT)
(74) Representative: Bonini, Ercole
(86) International application number: PCT/IB2019/058227
(87) International publication number: WO 2020/065604

(56) References cited:
- WO-A1-2014/015852
- DE-C2- 2 462 809
- DE-U1- 29 700 455

## Description

The invention concerns a safety valve for equipment containing pressurized fluid, particularly suitable for application to horizontal or vertical wall mounted radiators of the ladder type.

The invention also relates to a wall mounted radiator that uses the aforesaid safety valve.

As is known, safety valves are applied to systems and equipment containing pressurized fluid and intervene by discharging into the surrounding environment any excess pressure that may arise in the system.

For that purpose, safety valves contain within them a shutter that can be calibrated which enables the opening thereof when the pressure within the system exceeds the calibration pressure of the shutter.

The valves are also provided with an outer thread that enables it to be screwed into a corresponding threaded hole realized passing into the pressurized body and a discharge conduit which in the event of intervention of the valve conveys the overpressurized fluid into the external environment.

A valve of the mentioned type is described in patent document EP1857745 and relates to a safety valve that is applied to radiators of the ladder type.

The valve is provided with a thread that enables it to be applied to the radiator and in the upper part with a rotatable cap in which the lateral overpressure discharge conduit is made.

By rotating the rotatable cap the discharge conduit can therefore be turned in the most appropriate direction so that in the event of intervention of the valve, the fluid that is discharged does not damage the walls and/or things and/or people present nearby.

The aforesaid valves however have the drawback that for some system situations lateral discharge, whichever way it is oriented, may not be acceptable.

Furthermore, the rotatable cap is placed above the threaded zone of the valve and, when it is installed, the cap projects anti-aesthetically from the top part of the radiator, and this constitutes a second drawback of such known valves. Safety valves are also known such as, for example, the safety valve described in patent document CH557493 which, when installed, does not project from the top part of the pressurized body to which it is applied but has the drawback that the shutter is in direct contact with the external environment and in the event of intervention it even projects outside. A further safety valve relevant to the subject-matter of claim 1 is known from DE 24 62 809 C2.

The present invention intends to overcome the listed drawbacks.

In particular, it is an object of the present invention to realize a safety valve that has the overpressure discharge conduit oriented according to the longitudinal axis of the valve.

It is another object that the valve shutter is totally contained in the valve body both when it is in the closed position, and when it is in the open position.

It is a further object that the valve of the invention is provided with manoeuvring means adapted to apply it to the related pressurized body, arranged within a valve body and accessible from the outside through a manoeuvring member.

It is another object that the end of the valve body in which the manoeuvring means is present is configured so as to be totally housed in the seat of the pressurized container to which the valve is applied.

The listed aims are reached by a safety valve having the characteristics according to the main claim to which reference will be made.

Further characteristics of the valve of the invention are described in the dependent claims.

The safety valve of the invention is advantageously used in heating systems and particularly is applied to wall mounted radiators of the ladder type as, when it is installed, it does not have any part projecting from the outer profile of the radiator.

Furthermore, advantageously, the direction of the discharge arranged according to the longitudinal direction of the valve reduces the possibility of damage in the surrounding environment in the event of discharge due to overpressure.

Finally, advantageously, the safety valve according to the invention can be installed instead of the safety valves with lateral discharge of existing systems, as it can be housed in the same housing and thus improve the aesthetic and functional characteristics of such systems.

The aims and advantages listed and any others shall be better highlighted below during the description of a preferred but not exclusive embodiment of the invention, which is provided with reference to the appended drawings in which:
- fig. 1 represents an axonometric view of the safety valve of the invention;
- fig. 2 represents the exploded axonometric view of fig. 1;
- fig. 3 represents the longitudinal section of fig. 1;
- fig. 4 represents the exploded view of fig. 3;
- fig. 5 represents a wall mounted radiator in which the safety valve according to the invention is installed;
- fig. 6 represents an enlarged detail of fig. 5;
- fig. 7 represents a safety valve with lateral discharge pertaining to the prior art;
- fig. 8 represents the plan view of fig. 7.

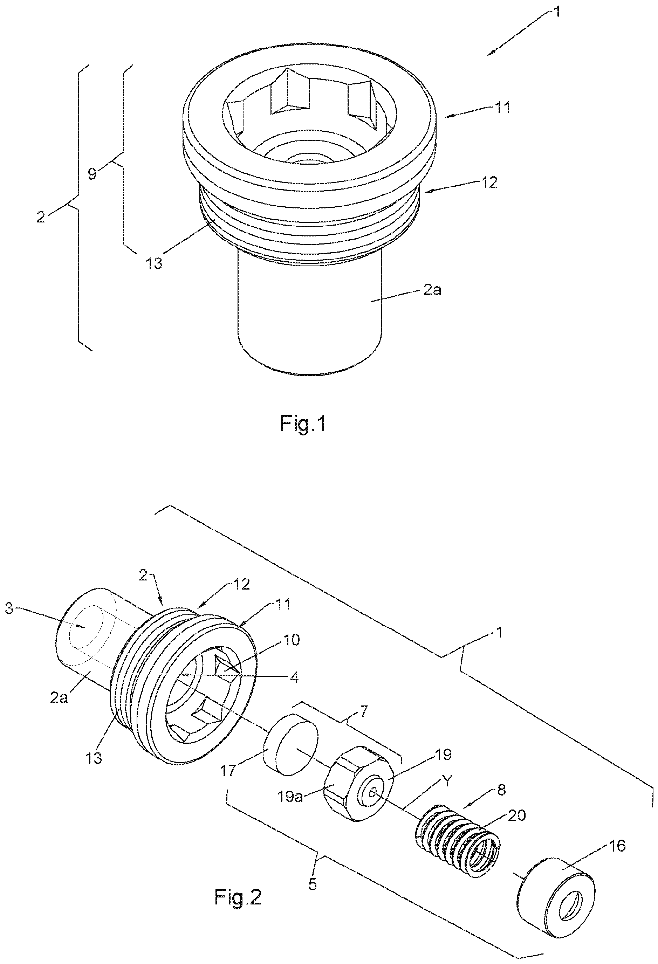

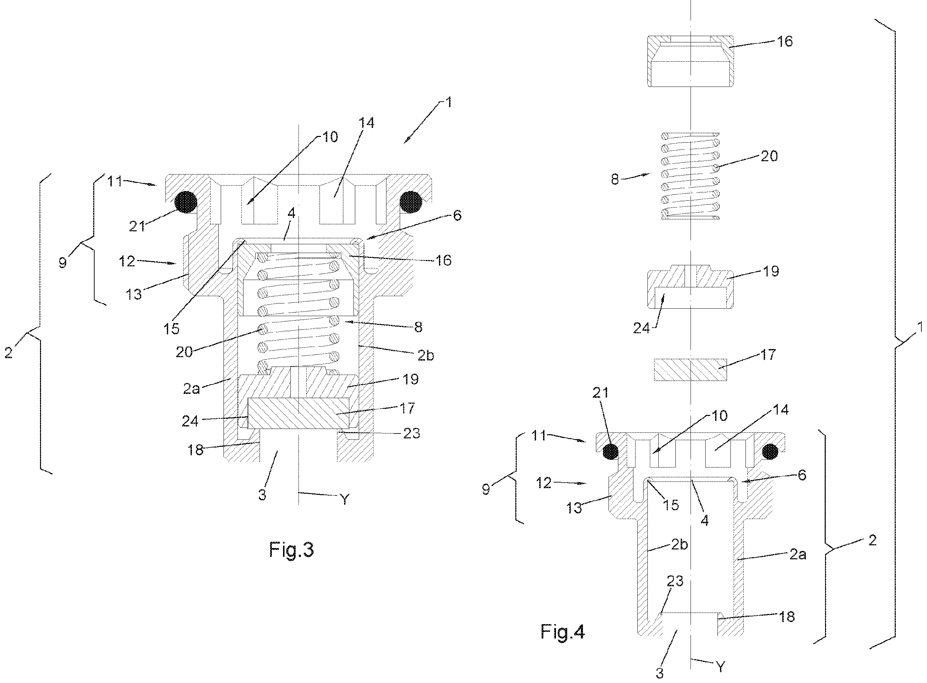

The safety valve of the invention is represented in an axonometric view in fig. 1 and in a longitudinal section in fig. 3 where it is indicated overall with **1.**

The safety valve **1** of the invention is also represented in an exploded axonometric view in fig. 2 and in an exploded longitudinal section in fig. 4.

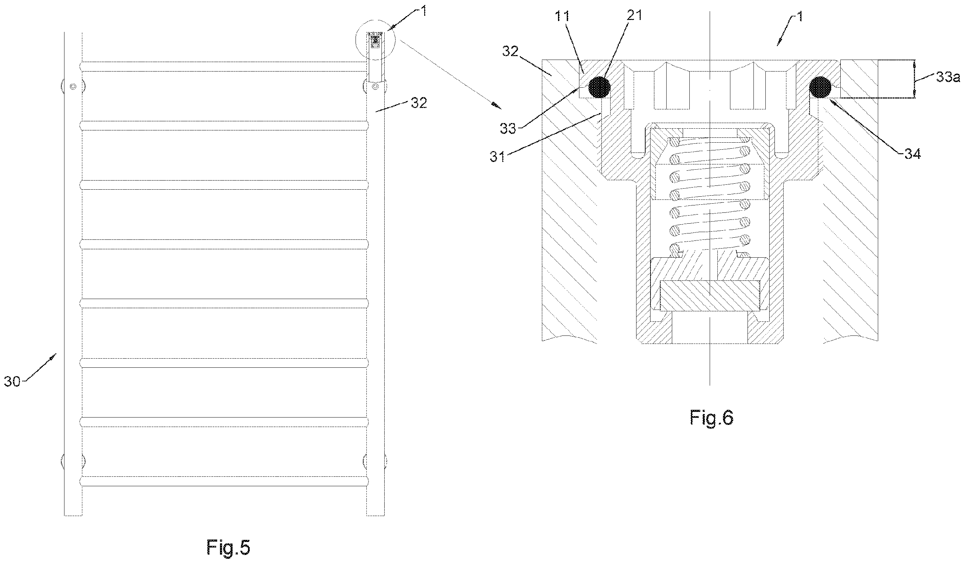

The valve **1** is particularly adapted to be applied to equipment containing pressurized fluids and particularly wall mounted radiators, e.g. to the radiator of the type represented schematically in fig. 5 and indicated with **30.**

The safety valve **1,** as can be observed, comprises a tubular sleeve **2** which defines a longitudinal axis **Y** and in which a tubular body **2a** is identified provided with an inlet hole **3** and an outlet hole **4** of the pressurized fluid. There is also a shutter unit **5** of the inlet hole **3** which is slidably housed in the tubular body **2a** and is comprised between the inlet hole **3** and the outlet hole **4.**

There are also retaining means of the shutter unit **5,** indicated overall with **6,** which are present at the outlet hole **4.**

According to the invention, the safety valve **1** also comprises a tubular flange **9** which belongs to the tubular body **2a** and is arranged coaxially and radially distanced externally to the outlet hole **4.**

Furthermore, the tubular flange **9** is internally provided with a shaped zone **10** arranged coaxially and distanced above the retaining means **6,** which is configured to house a manoeuvring key from the outside.

In relation to the shutter unit **5** it is observed, with particular reference to the exploded views of fig. 2 and fig. 4, that it comprises a shutter **7** configured to cooperate with the inlet hole **3** of the tubular body **2a** and elastic means **8** which are interposed between the shutter **7** and the retaining means **6** and are adapted to keep the shutter **7** in the position in which it normally closes the inlet hole **3,** as can be observed in fig. 3.

With regard, instead, to the tubular flange **9** it is observed that it comprises an annular perimeter edge **11** in which said shaped zone **10** is present, and an annular strip **12,** comprised between the tubular body **2a** and the annular perimeter edge **11,** which is arranged peripherally and radially distanced from the outlet hole **4** and from the retaining means **6.**

Furthermore, there is also a threaded zone **13** realized outside the annular strip **12** which is used to couple the safety valve **1** to the radiator **30** of fig. 5 in the respective threaded hole **31** that can be observed in fig. 6 or in another pressurized body.

The shaped zone **10** is therefore arranged coaxially and distanced above the annular strip **12** and the retaining means **6** which therefore do not hinder the manoeuvring key from being inserted in the shaped zone **10** for screwing or unscrewing the valve **1.**

It is also observed that the inlet hole **3,** the outlet hole **4** and the tubular body **2a** in which said holes are present are coaxial to one another according to the longitudinal axis **Y** defined by the tubular manifold **2.**

In this way, the direction of the fluid exiting the valve **1** in the event of overpressure is a rectilinear flow in the upwards direction which, unlike the valves with lateral discharge of the prior art, does not damage walls and/or things and/or people present near the equipment to which the safety valve is applied.

In particular, the shaped zone **10** has a female polygonal profile **14** preferably with a hexagonal shape, configured to receive the insertion of a manoeuvring key also having a male polygonal profile, preferably hexagonal.

With regard to the retaining means, indicated overall with **6,** they comprise a retaining edge **15** which is realized in the tubular body **2a** and projects towards the inside of the outlet hole **4** and a retaining ring **16** which is arranged inside the tubular body **2a** and is placed next to the retaining edge **15.**

In particular, the retaining edge **15,** although not represented in the figures, is obtained by folding the end edge of the outlet hole **4** towards the inside of the hole itself through a so-called centring operation well known in the sector of processing metals by plastic deformation.

In relation to the shutter **7** it is observed that it comprises a sealing gasket **17,** which is placed in contact with a sealing edge **18** realized in the tubular body **2a** and facing towards the inside of the inlet hole **3.**

The shutter **7** also comprises a gasket holder **19** which is provided with an internal seat **24** in which the sealing gasket **17** is housed and is slidably associated internally with the tubular body **2a** where it is arranged between the sealing gasket **17** and the elastic means **8.**

In particular, the sealing edge **18** has a shaped profile turned towards the inside of the tubular body **2a** which has the vertex **23** in contact with the sealing gasket **17.**

In this way, the sealing edge **18** penetrates into the sealing gasket **17** which is preferably made of plastic or elastomeric material guaranteeing the seal.

It is also observed that the gasket holder **19** has a polygonal external profile **19a,** whereas the tubular body **2a** has an internal cross section with a circular shape.

This configuration is important as, in the event of overpressure, the overpressurized fluid causes the compression of the elastic means **8** and the lifting of the gasket holder **19** with the related sealing gasket **17,** and flows through the inlet hole **3.** The fluid then expands into the tubular body **2a** until it spontaneously reaches the outlet hole **4** passing between the internal wall **2b** of the tubular body **2a** and the flat faces that delimit the external profile **19a** of the gasket holder **19.**

Finally, in relation to the elastic means **8** they may be made in different ways, but they preferably comprise a helical spring **20.**

Finally, to obtain the seal with respect to the pressurized body to which the safety valve **1** is applied, e.g. with respect to the wall mounted radiator **30** represented in fig. 5, the valve is provided with an annular seat **33** which is observed in particular in fig. 6 which is realized circumferentially outside the tubular flange **9** at the annular perimeter edge **11** and is configured to house a sealing ring **21** preferably of the OR type.

Operatively, as already mentioned, a valve **1** of the invention is applied to a radiator of the wall-mounted type, indicated overall with **30** in fig. 5, to which it is screwed in a threaded hole **31** present in one or in both of the upright columns **32.**

For that purpose it is observed in the enlargement of fig. 6 that in the upright column **32** a seat **33** is realized which houses the annular perimeter edge **11** of the valve and that has a shoulder **34** on which the sealing ring **21** goes into contrast when the valve **1** is screwed into the threaded hole **31.**

It is observed that the height **33a** of the seat **33** is such as to contain the whole annular perimeter edge **11** when the valve **1** is screwed.

In this way, there is no projection present from the top zone of the radiator **30,** as can be observed in fig. 5, unlike what happens in the prior art, e.g. when lateral discharge valves are used of the type described in the mentioned patent document EP1857745.

The safety valve **1** of the invention is advantageously adapted to replace the lateral discharge valves of the type described in the mentioned patent document EP1857745.

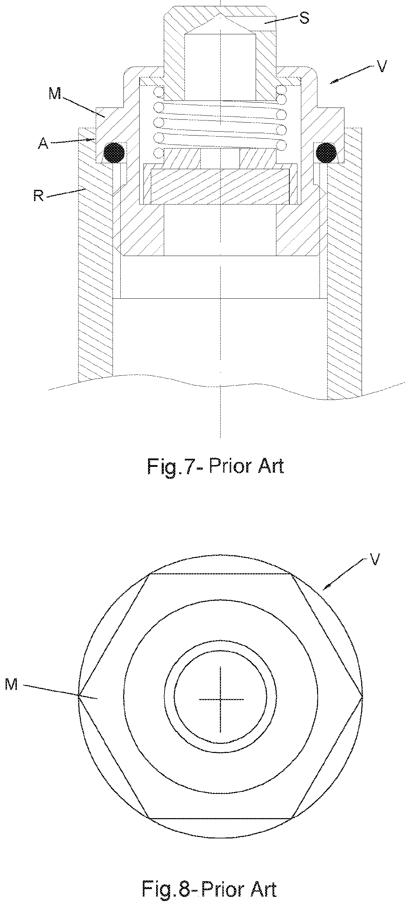

For that purpose, a known valve realized according to the teachings of document EP1857745 is represented in the two views of figs. 7 and 8 where it is indicated overall by **V** and where it is observed that it has the upper part in which the orientable lateral discharge **S** is realized and part of the manoeuvring profile **M** which project from the seat **A** and therefore also from the top of the radiator **R** to which it is applied.

It is easy to understand that the safety valve **V** of the prior art can be advantageously replaced with the valve **1** of the invention as the same seat **A** can completely house the annular perimeter edge **11** of the valve **1** of the invention so as to prevent any anti-aesthetic projection from the top of the radiator **R.**

Therefore, in pressurized containers **R** of the type represented in fig. 7 provided with safety valves **V** of the prior art, these may be advantageously and easily replaced with the valves **1** of the invention.

Based on the above, it is thus clear that the safety valve according to the invention reaches all the prefixed aims.

In the operation stage, modifications or variants not described and not represented in the figures may be made to the valve of the invention, and should such modifications or variants be contained within the descriptive scope of the following claims, they must absolutely all be considered protected by the present patent.

## Claims

1. Safety valve (1), particularly adapted to be applied to equipment (30) containing a pressurized fluid and comprising a tubular sleeve (2) that defines a longitudinal axis (Y) and in which the following are identified:
- a tubular body (2a) provided with an inlet hole (3) and an outlet hole (4) of said pressurized fluid;
- a shutter unit (5) of said inlet hole (3) slidably housed within said tubular body (2a) and comprised between said inlet hole (3) and said outlet hole (4);
- a retaining means (6) of said shutter unit (5) present at said outlet hole (4),
- tubular flange (9) belonging to said tubular body (2a) and arranged coaxially and radially distanced externally to said outlet hole (4), said tubular flange (9) being provided internally with a shaped zone (10) configured to house a manoeuvring key, said shaped zone (10) being arranged coaxially and above said retaining means (6),
**characterized in that said** retaining means (6) comprise:
- a retaining edge (15) realized in said tubular body (2a) and projecting towards the inside of said outlet hole (4);
- a retaining ring (16) arranged inside said tubular body (2a) and placed close to said retaining edge (15),
said retaining edge (15) being obtained through bending by plastic deformation of the end edge of said outlet hole (4) towards the outlet of said same outlet hole (4).

2. Safety valve (1) according to claim 1, **characterized in that** said shutter unit (5) comprises: a shutter (7) configured to cooperate with said inlet hole (3) of said tubular body (2a) and elastic means (8) interposed between said shutter (7) and said retaining means (6), adapted to keep said shutter (7) in the position in which it normally closes said inlet hole (3).

3. Safety valve (1) according to any one of the preceding claims, **characterized in that** said tubular flange (9) comprises:
- an annular perimeter edge (11) inside which there is said shaped zone (10) configured to house said manoeuvring key;
- an annular strip (12) comprised between said tubular body (2a) and said annular perimeter edge (11), arranged peripherally and radially distanced from said outlet hole (4) and from said retaining means (6);
- a threaded zone (13) realized outside said annular strip (12).

4. Safety valve (1) according to any one of the preceding claims, **characterized in that** said inlet hole (3), said outlet hole (4) and said tubular body (2a) are coaxial to one another according to said longitudinal axis (Y) defined by said tubular sleeve (2).

5. Safety valve (1) according to any one of the preceding claims, **characterized in that** said shaped zone (10) has a female polygonal profile (14) configured to receive the insertion of a manoeuvring key having a male polygonal profile.

6. Safety valve (1) according to any one of claims from 2 to 5, **characterized in that** said shutter (7) comprises:
- a sealing gasket (17) placed in contact with a sealing edge (18) made in said tubular body (2a) and turned towards the inside of said tubular body (2a);
- a gasket holder (19) provided with an internal seat (24) in which said sealing gasket (17) is housed, slidably associated internally with said tubular body (2a) and arranged between said sealing gasket (17) and said elastic means (8).

7. Safety valve (1) according to claim 6, **characterized in that** said gasket holder (19) has a polygonal external profile (19a) and said tubular body (2a) has a circular shaped internal cross section.

8. Safety valve (1) according to any one of claims 6 or 7, **characterized in that** said sealing edge (18) has a shaped profile turned towards the inside of said tubular body (2a) and having the vertex (23) in contact with said sealing gasket (17).

9. Safety valve (1) according to any one of the previous claims from 2 to 8, **characterized in that** said elastic means (8) comprise at least one helical spring (20).

10. Safety valve (1) according to any one of the preceding claims, **characterized in that** it comprises an annular seat (33) realized circumferentially outside said tubular flange (9) and configured to house a sealing ring (21).

11. Radiator (30) comprising one or more safety valves, **characterized in that** said one or more safety valves are of the type according to any one of the preceding claims from 1 to 10.

## Patentansprüche

1. Sicherheitsventil (1), das insbesondere zur Anwendung in Anlagen (30) geeignet ist, die ein unter Druck stehendes Fluid enthalten, und das eine rohrförmige Muffe (2) umfasst, die eine Längsachse (Y) definiert und in der folgende Merkmale vorhanden sind:
- ein rohrförmiger Körper (2a), der mit einem Einlassloch (3) und einem Auslassloch (4) für das unter Druck stehende Fluid versehen ist;
- eine Verschlusseinheit (5) des Einlasslochs (3), die verschiebbar in dem rohrförmigen Körper (2a) untergebracht ist und zwischen dem Einlassloch (3) und dem Auslassloch (4) liegt;
- ein Rückhaltemittel (6) der Verschlusseinheit (5), das sich an der Auslassloch (4) befindet,
- ein rohrförmiger Flansch (9), der zu dem rohrförmigen Körper (2a) gehört und koaxial und radial beabstandet außerhalb des Auslasslochs (4) angeordnet ist, wobei der rohrförmige Flansch (9) innen mit einer geformten Zone (10) versehen ist, die so konfiguriert ist, dass sie einen Betätigungsschlüssel aufnimmt, wobei die geformte Zone (10) koaxial und oberhalb des Rückhaltemittels (6) angeordnet ist,
**dadurch gekennzeichnet, dass** das Rückhaltemittel (6) Folgendes umfasst:
- eine Rückhaltekante (15), die in dem rohrförmigen Körper (2a) ausgebildet ist und in das Innere des Auslasslochs (4) hineinragt;
- einen Rückhaltering (16), der im Inneren des rohrförmigen Körpers (2a) angeordnet ist und sich in der Nähe der Rückhaltekante (15) befindet,
wobei die Rückhaltekante (15) durch Biegen durch plastische Verformung der Endkante des Auslasslochs (4) in Richtung des Auslasses desselben Auslasslochs (4) erhalten wird.

2. Sicherheitsventil (1) nach Anspruch 1, **dadurch gekennzeichnet, dass** die Verschlusseinheit (5) Folgendes umfasst: einen Verschluss (7), der so konfiguriert ist, dass er mit dem Einlassloch (3) des rohrförmigen Körpers (2a) zusammenwirkt, und ein elastisches Mittel (8), das zwischen dem Verschluss (7) und dem Rückhaltemittel (6) angeordnet ist und dazu geeignet ist, den Verschluss (7) in der Position zu halten, in der er normalerweise das Einlassloch (3) verschließt.

3. Sicherheitsventil (1) nach einem der vorhergehenden Ansprüche, **dadurch gekennzeichnet, dass** der rohrförmige Flansch (9) Folgendes umfasst:
- einen ringförmigen Umfangsrand (11), innerhalb dessen sich die geformte Zone (10) befindet, die so gestaltet ist, dass sie den Betätigungsschlüssel aufnimmt;
- einen ringförmigen Streifen (12) zwischen dem rohrförmigen Körper (2a) und dem ringförmigen Umfangsrand (11), der in Umfangsrichtung und radial beabstandet von dem Auslassloch (4) und von dem Rückhaltemittel (6) angeordnet ist;
- einen Gewindebereich (13), der außerhalb des ringförmigen Streifens (12) liegt.

4. Sicherheitsventil (1) nach einem der vorhergehenden Ansprüche, **dadurch gekennzeichnet, dass** das Einlassloch (3), das Auslassloch (4) und der rohrförmige Körper (2a) koaxial zueinander sind, und zwar in Bezug auf die Längsachse (Y), die durch die rohrförmige Muffe (2) definiert ist.

5. Sicherheitsventil (1) nach einem der vorhergehenden Ansprüche, **dadurch gekennzeichnet, dass** die geformte Zone (10) ein polygonales Buchsenprofil (14) aufweist, das so gestaltet ist, dass es das Einsetzen eines Betätigungsschlüssels mit einem polygonalen Steckprofil aufnehmen kann.

6. Sicherheitsventil (1) nach einem der vorhergehenden Ansprüche 2 bis 5, **dadurch gekennzeichnet, dass** der Verschluss (7) Folgendes umfasst:
- eine Dichtung (17), die mit einer in dem rohrförmigen Körper (2a) ausgebildeten und zum Inneren des rohrförmigen Körpers (2a) gerichteten Dichtungskante (18) in Kontakt steht;
- einen Dichtungshalter (19), der mit einem inneren Sitz (24) versehen ist, in dem die Dichtung (17) untergebracht ist, der gleitend im Inneren des rohrförmigen Körpers (2a) angeordnet ist und zwischen der Dichtung (17) und dem elastischen Mittel (8) angeordnet ist.

7. Sicherheitsventil (1) nach Anspruch 6, **dadurch gekennzeichnet, dass** der Dichtungshalter (19) ein polygonales Außenprofil (19a) hat und der rohrförmige Körper (2a) einen kreisförmigen Innenquerschnitt aufweist.

8. Sicherheitsventil (1) nach einem der Ansprüche 6 oder 7, **dadurch gekennzeichnet, dass** die Dichtungskante (18) ein geformtes Profil aufweist, das zur Innenseite des rohrförmigen Körpers (2a) gerichtet ist und dessen Scheitel (23) in Kontakt mit der Dichtung (17) steht.

9. Sicherheitsventil (1) nach einem der vorhergehenden Ansprüche 2 bis 8, **dadurch gekennzeichnet, dass** das elastische Mittel (8) mindestens eine Schraubenfeder (20) umfasst.

10. Sicherheitsventil (1) nach einem der vorhergehenden Ansprüche, **dadurch gekennzeichnet, dass** es einen ringförmigen Sitz (33) aufweist, der in Umfangsrichtung außerhalb des rohrförmigen Flansches (9) angeordnet und zur Aufnahme eines Dichtungsrings (21) ausgebildet ist.

11. Heizkörper (30) mit einem oder mehreren Sicherheitsventilen, **dadurch gekennzeichnet, dass** das eine oder die mehreren Sicherheitsventile von der Art nach einem der vorhergehenden Ansprüche 1 bis 10 sind.

## Revendications

1. Soupape de sécurité (1), particulièrement adaptée pour être appliquée à un équipement (30) contenant un fluide sous pression et comprenant un manchon tubulaire (2) qui définit un axe longitudinal (Y) et dans laquelle sont identifiés les éléments suivants:
- un corps tubulaire (2a) muni d'un orifice d'entrée (3) et d'un orifice de sortie (4) dudit fluide sous pression;
- une unité d'obturation (5) dudit orifice d'entrée (3) logée de manière coulissante dans ledit corps tubulaire (2a) et comprise entre ledit orifice d'entrée (3) et ledit orifice de sortie (4);
- des moyens de retenue (6) de ladite unité d'obturation (5) présent au niveau dudit orifice de sortie (4),
- une bride tubulaire (9) appartenant audit corps tubulaire (2a) et disposée coaxialement et radialement à distance à l'extérieur dudit orifice de sortie (4), ladite bride tubulaire (9) étant munie intérieurement d'une zone façonnée (10) configurée pour loger une clé de manoeuvre, ladite zone façonnée (10) étant disposée coaxialement et au-dessus dudit moyen de retenue (6),
**caractérisée en ce que** lesdits moyens de retenue (6) comprennent:
- un bord de retenue (15) réalisé dans ledit corps tubulaire (2a) et faisant saillie vers l'intérieur dudit orifice de sortie (4);
- une bague de retenue (16) disposée à l'intérieur dudit corps tubulaire (2a) et placée à proximité dudit bord de retenue (15),
ledit bord de retenue (15) étant obtenu à travers la flexion par déformation plastique du bord d'extrémité dudit orifice de sortie (4) vers la sortie dudit même orifice de sortie (4).

2. Soupape de sécurité (1) selon la revendication 1, **caractérisée en ce que** ladite unité d'obturation (5) comprend: un obturateur (7) configuré pour coopérer avec ledit orifice d'entrée (3) dudit corps tubulaire (2a) et des moyens élastiques (8) interposés entre ledit obturateur (7) et lesdits moyens de retenue (6), adaptés pour maintenir ledit obturateur (7) dans la position dans laquelle il ferme normalement ledit orifice d'entrée (3).

3. Soupape de sécurité (1) selon l'une quelconque des revendications précédentes, **caractérisée en ce que** ladite bride tubulaire (9) comprend:
- un bord périmétrique annulaire (11) à l'intérieur duquel se trouve ladite zone façonnée (10) configurée pour loger ladite clé de manœuvre;
- une bande annulaire (12) comprise entre ledit corps tubulaire (2a) et ledit bord périmétrique annulaire (11), disposée de manière périmétrique et radialement à distance dudit orifice de sortie (4) et desdits moyens de retenue (6);
- une zone filetée (13) réalisée à l'extérieur de ladite bande annulaire (12).

4. Soupape de sécurité (1) selon l'une quelconque des revendications précédentes, **caractérisée en ce que** ledit orifice d'entrée (3), ledit orifice de sortie (4) et ledit corps tubulaire (2a) sont coaxiaux entre eux selon ledit axe longitudinal (Y) défini par ledit manchon tubulaire (2).

5. Soupape de sécurité (1) selon l'une quelconque des revendications précédentes, **caractérisée en ce que** ladite zone façonnée (10) présente un profil polygonal femelle (14) configuré pour recevoir l'insertion d'une clé de manœuvre présentant un profil polygonal mâle.

6. Soupape de sécurité (1) selon l'une quelconque des revendications de 2 à 5, **caractérisée en ce que** ledit obturateur (7) comprend:
- un joint d'étanchéité (17) placé en contact avec un bord d'étanchéité (18) réalisé dans ledit corps tubulaire (2a) et tourné vers l'intérieur dudit corps tubulaire (2a);
- un porte-joint (19) muni d'un siège interne (24) dans lequel est logé ledit joint d'étanchéité (17), associé de manière coulissante intérieurement avec ledit corps tubulaire (2a) et disposé entre ledit joint d'étanchéité (17) et lesdits moyens élastiques (8).

7. Soupape de sécurité (1) selon la revendication 6, **caractérisée en ce que** ledit porte-joint (19) présente un profil externe polygonal (19a) et ledit corps tubulaire (2a) présente une section transversale interne de forme circulaire.

8. Soupape de sécurité (1) selon l'une quelconque des revendications 6 ou 7, **caractérisée en ce que** ledit bord d'étanchéité (18) présente un profil façonné tourné vers l'intérieur dudit corps tubulaire (2a) et ayant le sommet (23) en contact avec ledit joint d'étanchéité (17).

9. Soupape de sécurité (1) selon l'une quelconque des revendications précédentes de 2 à 8, **caractérisée en ce que** lesdits moyens élastiques (8) comprennent au moins un ressort hélicoïdal (20).

10. Soupape de sécurité (1) selon l'une quelconque des revendications précédentes, **caractérisée en ce qu'**elle comprend un siège annulaire (33) réalisé circonférentiellement à l'extérieur de ladite bride tubulaire (9) et configuré pour loger une bague d'étanchéité (21).

11. Radiateur (30) comprenant une ou plusieurs soupapes de sécurité, **caractérisé en ce que** lesdites une ou plusieurs soupapes de sécurité sont du type selon l'une quelconque des revendications précédentes de 1 à 10.
